# EUROPÄISCHE PATENTSCHRIFT

(11) **EP 0 536 707 B1**
(45) Veröffentlichungstag und Bekanntmachung des Hinweises auf die Patenterteilung: **29.05.1996**
(21) Anmeldenummer: 92117070.0
(22) Anmeldetag: 07.10.1992
(51) Int. Cl.: B60G 17/033, B60G 21/073, B60G 9/00

(54) **Vorrichtung zur Stabilisierung des Aufbaus von Kraftfahrzeugen**
Method for stabilising the body of motor vehicles
Procédé pour stabiliser le châssis de véhicules automobiles

(30) Priorität: 11.10.1991 DE 4133725
(43) Veröffentlichungstag der Anmeldung: 14.04.1993
(73) Patentinhaber: ZF FRIEDRICHSHAFEN Aktiengesellschaft, D-88038 Friedrichshafen (DE)
(72) Erfinder: Eidam, Dirk-Uwe, W-5024 Pulheim (DE); Gazyakan, Ünal, W-7990 Friedrichshafen (DE)

(56) Entgegenhaltungen:
- EP-A- 0 201 425
- WO-A-81/03466
- DE-A- 2 048 323
- DE-A- 4 115 717
- FR-A- 822 766
- FR-A- 1 303 348
- FR-A- 2 252 228
- US-A- 2 914 338
- US-A- 2 967 062
- US-A- 3 606 374
- US-A- 4 484 767

## Beschreibung

Die Erfindung bezieht sich auf Vorrichtungen zur Stabilisierung des Aufbaus von Kraftfahrzeugen, bei der jedes Fahrzeugrad über einen Doppelkammer-Hydraulikzylinder und eine Feder zur statischen Lastaufnahme aufgehängt ist und die Doppelkammer-Hydraulikzylinder durch Leitungen, an die jeweils ein hydro-pneumatischer Speicher mit einem Dämpfer angeschlossen ist, über Kreuz miteinander verbunden sind sowie Mitteln zum Beaufschlagen der Doppelkammer-Hydraulikzylinder mit Hydraulikflüssigkeit. Eine solche Vorrichtung ist zum Beispiel aus der EP-A-0 201 425 bekannt.

Mit einer Vorrichtung der vorstehend geschilderten Art läßt sich der Aufbau eines Kraftfahrzeugs gegen Kurvenneigung stabilisieren. Aus der US-A 3 606 374 ist eine Vorrichtung zum Ausgleich von Wankbewegungen bekanntgeworden, bei der Doppelkammer-Hydraulikzylinder verwendet werden, deren Kammern über Kreuz miteinander verbunden sind. An die Verbindungsleitungen sind hydro-pneumatische Speicher angeschlossen, so daß ein hydro-pneumatischer Stabilisator gebildet wird. Zur statischen Lastaufnahme sind zwei hydro-pneumatische Speicher vorgesehen, von denen jeweils einer einem Doppelkammer-Hydraulikzylinder zugeordnet ist.

Die DE-A 20 48 323 zeigt eine Vorrichtung zum Ausgleich der Wankneigung, bei der die Doppelkammer-Hydraulikzylinder mit Hydraulikflüssigkeit aktiv beaufschlagt werden. Die über Kreuz geschalteten Doppelkammer-Hydraulikzylinder werden über einen Regler, ein Regelventil und einen Verdrängerzylinder in Abhängigkeit von der Neigung des Fahrzeugoberbaus verstellt. Eine vergleichbare Vorrichtung zeigt die EP-A 0 201 425. Hier ist jedem Doppelkammer-Hydraulikzylinder zur statischen Lastaufnahme eine Feder-Dämpfer-Kombination zugeordnet. In den Verbindungsleitungen der Doppelkammer-Hydraulikzylinder liegen hydro-pneumatische Speicher mit einem Dämpfer. Diese Elemente bilden einen hydro-pneumatischen Stabilisator.

Bei allgemeiner Betrachtung der Wankneigung des Aufbaus eines Kraftfahrzeugs und Verwendung einer Starrachse gilt, daß die Abstände der Federn und der Anlenkpunkte der Stabilisatoren in die Übersetzung bei wechselseitiger Federung eingehen. Je größer diese Übersetzung wird, erfolgt eine umso geringere Wankabstützung des Aufbaus. Daraus folgt, daß die Federn und Stabilisatorarme möglichst weit außen am Starrachskörper befestigt sein müssen, um bei bestimmten konstruktiven Gegebenheiten eine große Wanksteifigkeit zu erzielen. Bei den bekannten aktiven Vorrichtungen zur Stabilisierung des Aufbaus gegen Wankneigung wird von diesen geläufigen Überlegungen ausgegangen. Die hydropneumatischen Stabilisatoren ersetzen den Drehstabilisator. Zur Minimierung des Bauaufwandes ist man bestrebt, mit einem möglichst klein dimensionierten Stabilisator auszukommen und daher den Anteil des Stabilisators an der geforderten gesamten Wanksteifigkeit an der Achse zu minimieren. Da andererseits die vertikale Steifigkeit der Federn durch die vertikaldynamische Auslegung praktisch festgelegt ist, wird auch hier der Abstand der Federn möglichst groß gewählt.

Die geläufigen Überlegungen zur Auslegung eines Wankregelungssystems führen wegen des geringen Steifigkeitanteils der Stabilisatoren zu einer notwendigerweise hohen Spitzenleistung der hydrostatischen Verdrängereinheit zur Verstellung der Doppelkammer-Hydraulikzylinder und zu einem außerordentlich hohen Energieverbrauch. So beträgt die erforderliche Aktuatorleistung bei einem Reisebus mindestens 20 kW.

Der vorliegenden Erfindung liegt, ausgehend von der Anordnung nach der EP-A 0 201 425, die Aufgabe zugrunde, ein aktives System zur Stabilisierung der Wankbewegungen des Aufbaus eines Kraftfahrzeugs zu schaffen, bei dem bei hoher Regelgüte (gleicher Wankwinkel) ein möglichst niedriger Leistungsbedarf für die Verstelleinrichtung (Aktuator) bei reduziertem Bauaufwand erreicht wird.

Zur Lösung der gestellten Aufgabe werden erfindungsgemäß zwei Vorschläge gemacht. Bei der Lösung nach dem Patentanspruch 1 sind die Fahrzeugräder an einer Starrachse befestigt. Zur statischen Lastaufnahme ist eine einzige Feder vorgesehen, die etwa mittig an der Starrachse angreift. Mit dieser Lösung wird der Anteil der Wanksteifigkeit aus der Vertikalfederung an der gesamten Wanksteifigkeit an der Achse eliminiert. Neben einer erheblich reduzierten erforderlichen Aktuatorleistung führt dies zu einer spürbaren Senkung des baulichen Aufwandes.

Unter Beibehaltung der vorstehend erwähnten Vorteile ist die Anwendung des erfindungsgemäßen Lösungsgedankens bei einer Einzelradaufhängung dadurch möglich, daß zur statischen Lastaufnahme eine einzige Feder vorgesehen ist, die etwa mittig an einem Waagebalken angreift (Patentanspruch 2). Die einzeln aufgehängten Fahrzeugräder sind dann mit dem Waagebalken so verbunden, daß ihre Vertikalbewegungen gemittelt oder addiert werden.

Abweichend von den bekannten Lösungen beruht die Auslegungsstrategie nach der Erfindung darin, daß die Gesamtwanksteifigkeit der Vorrichtung im wesentlichen der Wanksteifigkeit des hydro-pneumatischen Stabilisators entspricht, d. h. der Anteil der Wanksteifigkeit aus der Vertikalfederung eliminiert ist.

Bei der konstruktiven Umsetzung des Erfindungsgedankens ist es vorteilhaft, die Feder als Luftfeder auszubilden. Es handelt sich hier um ein relativ preiswertes Bauteil, mit dem hohe statische Lasten aufgenommen werden können. Es ist jedoch ebenfalls möglich, daß die Feder aus einem hydro-pneumatischen Speicher gebildet ist.

Wird die Erfindung bei einer Starrachse für Kraftfahrzeuge konstruktiv realisiert, ist es vorteilhaft, an der Starrachse mittig eine Luftfeder zu befestigen und die Doppelkammer-Hydraulikzylinder an den äußeren Enden einer Achsbrücke im Bereich von Radköpfen anzulenken. Die mittig angeordnete Luftfeder nimmt die statische Vertikallast auf. Zunächst ergibt sich durch das (einzige) Federelement eine Kostenreduzierung. Ferner ist weniger Bauraum erforderlich. Insbesondere kann bei zwillingsbereiften Achsen die übliche Hilfsträgerkonstruktion zur Federspurweitenerhöhung entfallen, was ein besonders wertvoller Vorteil ist. Da die mittige Feder keine Wankmomente aufbringt und die Gesamtsteifigkeit von dem hydro-pneumatischen Stabilisator aufgebracht wird, ist eine leistungsoptimierte Wankregelung möglich.

Die Mittel zum Beaufschlagen der DoppelkammerHydraulikzylinder bestehen in vorteilhafter Weise aus einem Verdrängereinheit, einem elektrischen Stellmotor mit Untersetzungsgetriebe und einem Stelltrieb. Der elektrische Stellmotor ist mit einem Mikroprozessor verbunden und erhält von diesem Stellsignale.

Die Vertikalbewegungen der Fahrzeugräder werden in vorteilhafter Weise durch Wegsensoren erfaßt. Die Wegsensoren sind mit dem Mikroprozessor verbunden.

Die erfindungsgemäße Starrachse, an der mittig eine Luftfeder angreift und an deren äußeren Enden die Doppelkammer-Hydraulikzylinder angelenkt sind, eignet sich in besonderer Weise zur Anwendung bei einem Omnibus. Bei dieser zwillingsbereiften Achse entfällt die übliche Hilfsträgerkonstruktion zur Erhöhung der Federspurweite. Durch den Entfall der Hilfsträgerkonstruktion wird zusätzlicher Bauraum zur Verfügung gestellt, der beispielsweise bei Reisebussen als Stauraum genutzt werden kann.

Weitere für die Erfindung wesentliche Merkmale sowie die daraus resultierenden Vorteile sind der nachfolgenden Beschreibung zweier Ausführungsbeispiele der Erfindung zu entnehmen. Es zeigen:

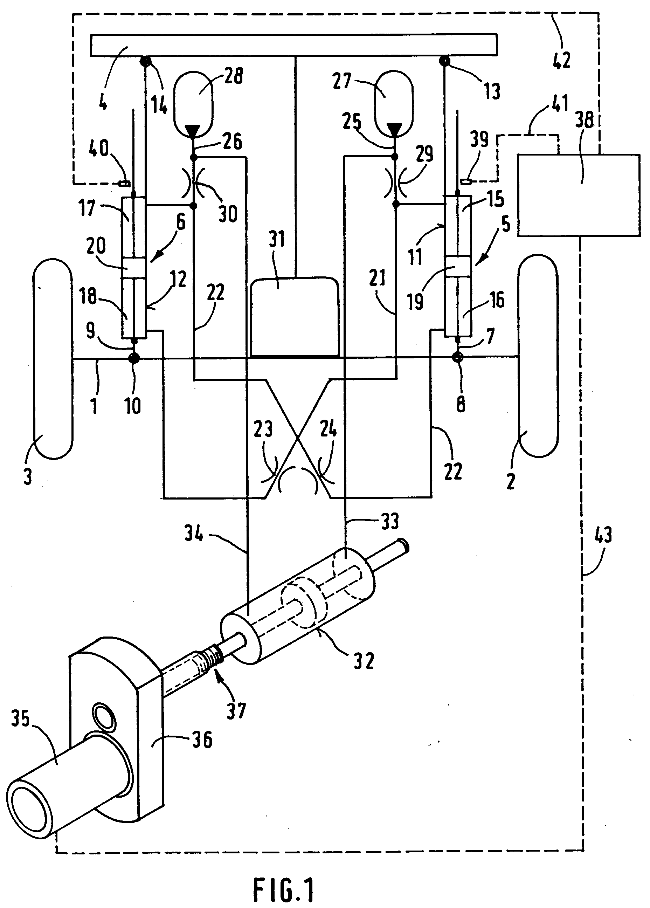

- Fig. 1: eine Vorrichtung zur Stabilisierung des Aufbaus von Kraftfahrzeugen in Verbindung mit einer Starrachse;
- Fig. 2: eine Starrachse nach der Erfindung in vereinfachter perspektivischer Darstellung;
- Fig. 3: eine Vorrichtung zur Stabilisierung des Aufbaus von Kraftfahrzeugen in Verbindung mit einer Einzelradaufhängung und
- Fig. 4: eine graphische Darstellung zur Betrachtung des Leistungsbedarfs.

In der Zeichnung ist in schematischer Darstellung eine Starrachse 1 mit daran befestigten Fahrzeugrädern 2 und 3 abgebildet. Anstelle der Fahrzeugräder 2 und 3 kann auch eine Zwillingsbereifung vorgesehen sein. Die Verbindung der Starrachse 1 mit einem Aufbau 4 erfolgt über Doppelkammer-Hydraulikzylinder 5 (in der Zeichnung rechts liegend) und 6 (in der Zeichnung links liegend).

Der Doppelkammer-Hydraulikzylinder 5 ist mit einer Kolbenstange 7 in einem Gelenk 8 an der Starrachse 1 angelenkt. Analog hierzu greift eine Kolbenstange 9 des Doppelkammer-Hydraulikzylinders 6 in einem Gelenk 10 an der Starrachse 1 an. Zylinder 11 und 12 sind mit Gelenken 13 und 14 des Aufbaus 4 verbunden. Jeder der Doppelkammer-Hydraulikzylinder 5 und 6 weist zwei Kammern 15 und 16 sowie 17 und 18 auf. Die Kammern 15 bis 18 sind durch Trennkolben 19 und 20 voneinander getrennt. Eine Leitung 21 verbindet die Kammer 15 des Doppelkammer-Hydraulikzylinders 5 mit der Kammer 18 des DoppelkammerHydraulikzylinders 6. In gleicher Weise verbindet eine Leitung 22 die Kammer 16 mit der Kammer 17. Durch die Leitungen 21 und 22 sind die Doppelkammer-Hydraulikzylinder 5 und 6 über Kreuz miteinander verschaltet. In den beiden Wankfederkreisen (Kammer 15, Leitung 21 und Kammer 18 bzw. Kammer 17, Leitung 22 und Kammer 16) befinden sich zur Dämpfung der Bewegungen des Aufbaus 4 Drosselventile 23 und 24. An jede der Leitungen 21 und 22 ist über Anschlußleitungen 25 und 26 ein hydropneumatischer Speicher 27 und 28 angeschlossen. In den Anschlußleitungen 25 und 26 liegen weitere Drosselventile 29 und 30 zur zusätzlichen Dämpfung der Wankbewegungen.

Eine Feder 31, die insbesondere als Luftfeder ausgebildet ist, greift etwa mittig an der Starrachse 1 an, bezogen auf deren Breitenerstreckung. Über die Feder 31 stützt sich in vertikaler Richtung die statische Last des Aufbaus 4 auf der Starrachse 1 ab. Für den Fall, daß die Doppelkammer-Hydraulikzylinder weiter Kammern zur Aufnahme von Hubbewegungen aufweisen, kann anstelle der Feder 31 ein Hubfederkreis vorhanden sein, der aus einer Leitung besteht, die die zusätzlichen Kammern miteinander verbindet und an die eine Gasfeder angeschlossen ist.

Allgemein gilt, daß sich die Gesamtsteifigkeit "cwg" an der Achse aus den Anforderungen der Fahrdynamik ergibt. Die Gesamtsteifigkeit "cwg" wird durch die Summe des Anteils der Wanksteifigkeit der Feder "cwf" und des Wanksteifigkeitsanteils des Stabilisators "cws" gebildet.

Der Summand "cwf" errechnet sich aus dem halben Quadrat der Federspurweite "sf" multipliziert mit dem Beiwert der vertikalen Steifigkeit der Federn "cf".

Durch die mittige Anordnung der Feder 31 wird der Steifigkeitsanteil der Feder "cf" reduziert oder, im Idealfall, eliminiert, so daß die Gesamtwanksteifigkeit "cwg" an der Achse der Steifigkeit des Stabilisators "cws" entspricht. Der Stabilisator wird bei der erfindungsgemäßen Anordnung aus den beiden Wankfederkreisen (über Kreuz geschaltete Doppelkammer-Hydraulikzylinder 5, 6 und hydropneumatische Speicher 27 und 28) gebildet.

Zur aktiven Wankstabilisierung wird die vorstehend beschriebene Vorrichtung durch Mittel zum Beaufschlagen der Doppelkammer-Hydraulikzylinder 5 und 6 mit Hydraulikflüssigkeit vervollständigt. Diese Mittel bestehen im einzelnen aus einer hydraulischen Verdrängereinheit 32, die über Leitungen 33 und 34 an die Anschlußleitungen 25 und 26 angeschlossen ist, einem elektrischen Stellmotor 35, einem Untersetzungsgetriebe 36 und einem Stelltrieb 37. Die elektromotorisch verstellbare Verdrängereinheit 32 stellt einen Aktuator dar, der die Doppelkammer-Hydraulikzylinder 5 und 6 in der Weise verstellt, daß den Wankbewegungen aktiv entgegengewirkt wird. Diese aktive Momentenaufprägung geschieht nach einem bestimmten Regelgesetz.

Ein Mikroprozessor 38 ist Bestandteil des Reglers. Über Wegsensoren 39 und 40 wird der Verschiebeweg der Kolbenstangen 7 und 9 der Doppelkammer-Hydraulikzylinder 5 und 6 erfaßt und über elektrische Leitungen 41 und 42 dem Mikroprozessor 38 mitgeteilt. Dieser liefert Stellsignale, die über eine weitere elektrische Leitung 43 dem Stellmotor 35 mitgeteilt werden. Um das Regelgesetz einzuhalten, muß der Aktuator eine Verschiebung der Kolbenstangen 7 und 9 mit einer bestimmten Geschwindigkeit herbeiführen. Gegen die Wankbewegung muß ein bestimmtes Rückstellmoment aufgebracht werden. Durch die erfindungsgemäße Auslegungsstrategie läßt sich die erforderliche Leistung minimieren, da diese aus dem Produkt des Stabilisatormoments und der Verschiebegeschwindigkeit gebildet wird. Dies ist möglich, weil die Wirkung der Federspurweite eliminiert ist.

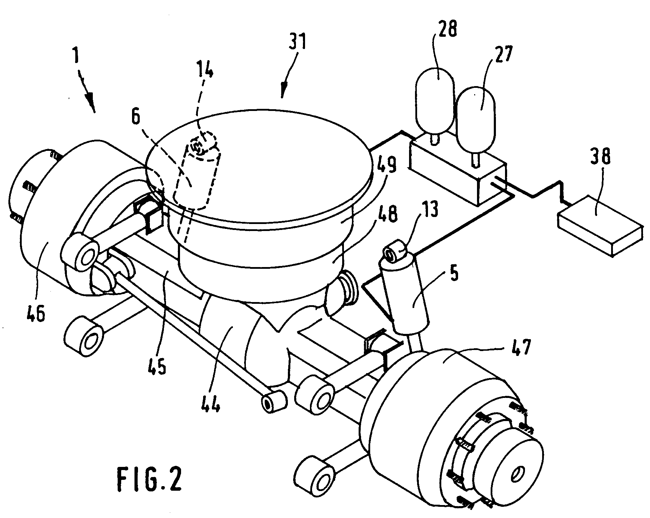

Ein bevorzugtes Ausführungsbeispiel für eine konstruktive Umsetzung des erfindungsgemäßen Prinzips ist in vereinfachter perspektivischer Darstellung der Fig. 2 zu entnehmen.

Zu erkennen ist die Starrachse 1 mit einem mittig liegenden Differentialgehäuse 44, Achsbrücken 45 und den Radköpfen 46 und 47. Die Fahrzeugräder sind nicht mit abgebildet. Auf das Differentialgehäuse 44 ist die Feder 31 aufgesetzt. Es handelt sich um eine Gasfeder, die aus zwei verschieblich ineinander geführten Töpfen 48 und 49 gebildet wird. Die Doppelkammer-Hydraulikzylinder 5 und 6 sind mit ihren Kolbenstangen 7 und 9 an der Starrachse 1 angelenkt. Zu sehen sind ferner die Anlenkpunkte 13 und 14 der Zylinder 11 und 12, über die die gelenkige Verbindung zum selbst nicht dargestellten Aufbau hergestellt wird. Die Anordnung wird durch weitere Führungsmittel, wie z. B. einen Panhardstab und Längslenkern vervollständigt.

Die in Leitungssträngen zusammengefaßten Hydraulikleitungen führen zu den hydro-pneumatischen Speichern 27 und 28.

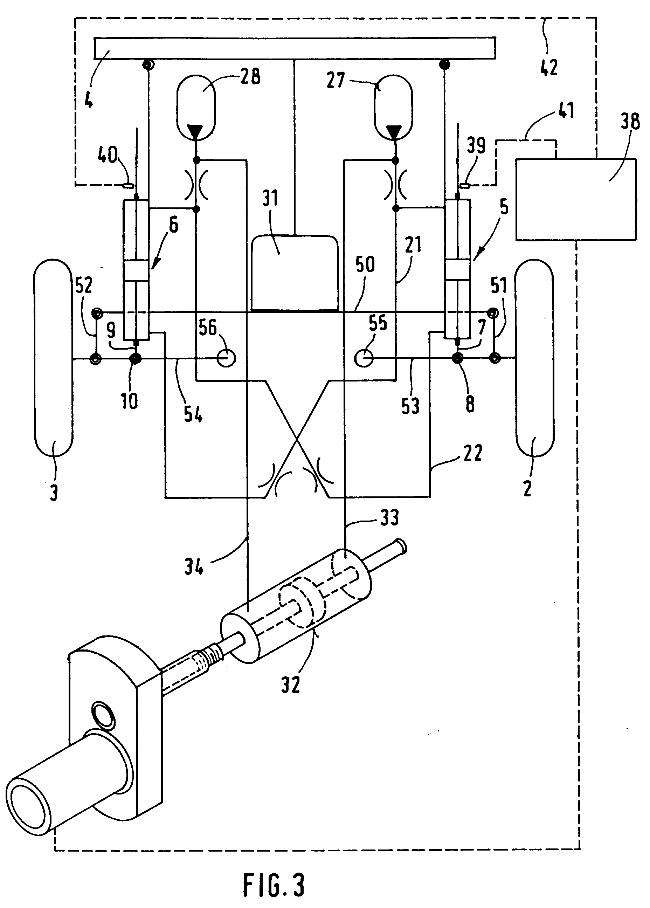

Bei der Vorrichtung nach Fig. 3 handelt es sich um ein Ausführungsbeispiel, bei dem von einzeln aufgehängten Fahrzeugrädern 2 und 3 ausgegangen wird. In dieser Figur sind gleiche Bauteile mit gleichen Bezugsziffern versehen. Bei dieser Konstruktion greift die Feder 31 mittig an einem Waagebalken 50 an. An den freien Enden des Waagebalkens sind etwa vertikal gerichtete Verbindungsstreben 51 und 52 angelenkt. Die unteren Enden der Verbindungsstreben 51 und 52 sind gelenkig mit jeweils einem Querlenker 53 und 54 der Radaufhängung verbunden. Die Querlenker 53 und 54 sind in Gelenken 55 und 56 fahrzeugseitig angelenkt. Die Gelenke 8 und 10, über die die Kolbenstangen 7 und 9 angreifen, befinden sich an den Querlenkern 53 und 54.

Aus der Abbildung wird klar, daß das erfindungsgemäße Prinzip auch bei einer Einzelradaufhängung verwirklicht werden kann. Durch den Waagebalken 50 werden die Vertikalbewegungen der Fahrzeugräder 2 und 3 gemittelt oder addiert. Auch hier übernimmt die mittig angeordnete Feder statische Vertikallasten.

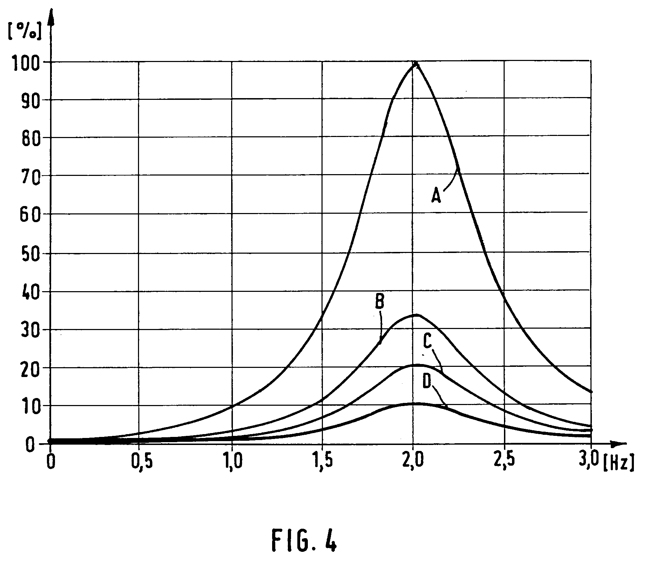

Die graphische Darstellung entsprechend Fig. 4 soll die der Erfindung zugrundeliegenden Erkenntnisse zusätzlich verdeutlichen. Das Diagramm zeigt die erforderliche Spitzenleistung des Aktuators in relativen Prozentzahlen. Diese sind auf der Ordinate in 10-%-Schritten eingetragen. Auf der Abszisse ist die Kraftanregung, die seitlich auf einen Reifen wirkt, in Hertz aufgetragen. Dem Modell liegt ein P-Regler zugrunde. Parameter ist ein voll beladener Hochdecker-Reisebus. Der Verlauf der Sprungantworten A, B, C und D gibt den Einfluß der Variation des Steifigkeitsanteils des Stabilisators wieder. Die maximale Spitzenleistung des Aktuators muß bei einem Stabilisatortraganteil von 10 % aufgebracht werden. Bei einem Stabilisatortraganteil von 33,3 % reduziert sich die Spitzenleistung des Aktuators auf ca. 33 %. Eine Reduktion dieses Wertes auf 20 % ergibt sich bei einem Traganteil des Stabilisators von 50 % (Kurve C). Bei einem 100%igen Traganteil des Stabilisators ist eine Spitzenleistung des Aktuators von lediglich ca. 10 % erforderlich.

### Bezugszeichen

- 1: Starrachse
- 2: Fahrzeugrad
- 3: Fahrzeugrad
- 4: Aufbau
- 5: Doppelkammer-Hydraulikzylinder
- 6: Doppelkammer-Hydraulikzylinder
- 7: Kolbenstange
- 8: Gelenk
- 9: Kolbenstange
- 10: Gelenk
- 11: Zylinder
- 12: Zylinder
- 13: Gelenk
- 14: Gelenk
- 15: Kammer
- 16: Kammer
- 17: Kammer
- 18: Kammer
- 19: Trennkolben
- 20: Trennkolben
- 21: Leitung
- 22: Leitung
- 23: Drosselventile
- 24: Drosselventile
- 25: Anschlußleitung
- 26: Anschlußleitung
- 27: hydro-pneumatischer Speicher
- 28: hydro-pneumatischer Speicher
- 29: Drosselventil
- 30: Drosselventil
- 31: Feder
- 32: Verdrängereinheit
- 33: Leitung
- 34: Leitung
- 35: Stellmotor
- 36: Untersetzungsgetriebe
- 37: Stelltrieb
- 38: Mikroprozessor
- 39: Wegsensor
- 40: Wegsensor
- 41: elektr. Leitung
- 42: elektr. Leitung
- 43: elektr. Leitung
- 44: Differentialgehäuse
- 45: Achsbrücke
- 46: Radköpfe
- 47: Radköpfe
- 48: Topf
- 49: Topf
- 50: Waagebalken
- 51: Verbindungsstrebe
- 52: Verbindungsstrebe
- 53: Querlenker
- 54: Querlenker
- 55: Gelenk
- 56: Gelenk

## Patentansprüche

1. Vorrichtung zur Stabilisierung des Aufbaus von Kraftfahrzeugen, bei der jedes Fahrzeugrad (2, 3) über einen Doppelkammer-Hydraulikzylinder (5, 6) und eine Feder zur statischen Lastaufnahme aufgehängt ist und die Doppelkammer-Hydraulikzylinder (5, 6) durch Leitungen (21, 22), an die jeweils ein hydro-pneumatischer Speicher (27, 28) mit einem Dämpfer angeschlossen ist, über Kreuz miteinander verbunden sind sowie Mitteln (32, 35, 36, 37) zum Beaufschlagen der Doppelkammer-Hydraulikzylinder (5, 6) mit Hydraulikflüssigkeit, dadurch **gekennzeichnet,** daß die Fahrzeugräder (2, 3) an einer Starrachse (1) befestigt sind, und daß zur statischen Lastaufnahme eine einzige Feder (31) vorgesehen ist, die etwa mittig an der Starrachse (1) angreift, bezogen auf deren Breitenerstreckung.

2. Vorrichtung zur Stabilisierung des Aufbaus von Kraftfahrzeugen, bei der jedes Fahrzeugrad (2, 3) über einen Doppelkammer-Hydraulikzylinder (5, 6) und eine Federzur statischen Lastaufnahme aufgehängt ist und die Doppelkammer-Hydraulikzylinder (5, 6) durch Leitungen (21, 22), an die jeweils ein hydro-pneumatischer Speicher (27, 28) mit einem Dämpfer angeschlossen ist, über Kreuz miteinander verbunden sind sowie Mitteln (32, 35, 36, 37) zum Beaufschlagen der Doppelkammer-Hydraulikzylinder (5, 6) mit Hydraulikflüssigkeit, dadurch **gekennzeichnet,** daß zur statischen Lastaufnahme eine einzige Feder (31) vorgesehen ist, die etwa mittig an einem Waagebalken (50) angreift, und daß die einzeln aufgehängten Fahrzeugräder (2, 3) mit dem Waagebalken (50) in der Weise verbunden sind, daß ihre Vertikalbewegungen gemittelt oder addiert werden.

3. Vorrichtung nach den Ansprüchen 1 oder 2, dadurch **gekennzeichnet,** daß die Feder (31) eine Luftfeder ist.

4. Vorrichtung nach den Ansprüchen 1 oder 2, dadurch **gekennzeichnet,** daß die Feder (31) aus einem hydro-pneumatischen Speicher gebildet ist.

5. Vorrichtung nach den Ansprüchen 1 und 3, dadurch **gekennzeichnet,** daß die Luftfeder (31) mittig an der Starrachse (1) befestigt ist und daß die Doppelkammer-Hydraulikzylinder (5, 6) an den äußeren Enden einer Achsbrücke (45) im Bereich von Radköpfen (46, 47) angelenkt sind.

6. Vorrichtung nach einem der Ansprüche 1 oder 2, dadurch **gekennzeichnet,** daß die Mittel (32, 35, 36, 37) zum Beaufschlagen der Doppelkammer-Hydraulikzylinder bestehen aus: einer Verdrängereinheit (32), einem elektrischen Stellmotor (35), einem Untersetzungsgetriebe (36) und einem Stelltrieb (37).

7. Vorrichtung nach einem der Ansprüche 1 oder 2, dadurch **gekennzeichnet,** daß die Mittel (32, 35, 36, 37) zum Beaufschlagen der Doppelkammer-Hydraulikzylinder aus einem hydrostatischen Aktuator bestehen.

8. Vorrichtung nach einem der Ansprüche 1 oder 2, dadurch **gekennzeichnet,** daß die Vertikalbewegungen der Fahrzeugräder (2, 3) durch Wegsensoren (39, 40) erfaßt und einem Mikroprozessor (38) mitgeteilt werden.

9. Vorrichtung nach Anspruch 5, **gekennzeichnet** durch die Verwendung bei einem Omnibus.

## Claims

1. Device for stabilising the body of motor vehicles, wherein each vehicle wheel (2, 3) is suspended via a double-chamber hydraulic cylinder (5, 6) and a spring for the purpose of absorbing static loads, and the double-chamber hydraulic cylinders (5, 6) are connected, by lines (21, 22) to which a hydro-pneumatic reservoir (27, 28) with a damper is linked in each case, cross-wise to one another and also to means (32, 35, 36, 37) for acting upon the double-chamber hydraulic cylinders (5, 6) with hydraulic fluid, **characterized** in that the vehicle wheels (2, 3) are fastened to a rigid axle (1), and that a single spring (31) is provided for absorbing static loads, which acts approximately centrally on the rigid axle (1), referred to the extent of the latter's width.

2. Device for stabilising the body of motor vehicles, wherein each vehicle wheel (2, 3) is suspended via a double-chamber hydraulic cylinder (5, 6) and a spring for the purpose of absorbing static loads, and the double-chamber hydraulic cylinders (5, 6) are connected, by lines (21, 22) to which a hydro-pneumatic reservoir (27, 28) with a damper is linked in each case, cross-wise to one another and also to means (32, 35, 36, 37) for acting upon the double-chamber hydraulic cylinders (5, 6) with hydraulic fluid, **characterized** in that a single spring (31) is provided for absorbing static loads, which acts approximately centrally on a balance beam (50), and that the individually suspended vehicle wheels (2, 3) are connected to the balance beam (50) in such a way that their vertical movements are averaged or added.

3. Device according to claims 1 or 2, **characterized** in that the spring (31) is an air spring.

4. Device according to claims 1 or 2, **characterized** in that the spring (31) is formed from a hydro-pneumatic reservoir.

5. Device according to claims 1 and 3, **characterized** in that the air spring (31) is fastened centrally to the rigid axle (1) and that the double-chamber hydraulic cylinders (5, 6) are articulatedly attached to the outer ends of an axle bracket (45) in the region of wheel heads (46, 47).

6. Device according to one of claims 1 or 2, **characterized** in that the means (32, 35, 36, 37) for acting upon the double-chamber hydraulic cylinders consist of: a displacement unit (32), an electric servomotor (35), a reduction gear unit (36) and an adjusting drive (37).

7. Device according to one of claims 1 or 2, **characterized** in that the means (32, 35, 36, 37) for acting upon the double-chamber hydraulic cylinders consist of a hydrostatic actuator.

8. Device according to one of claims 1 or 2, **characterized** in that the vertical movements of the vehicle wheels (2, 3) are detected by travel sensors (39, 40) and communicated to a microprocessor (38).

9. Device according to claim 5, **characterized** by use in an omnibus.

## Revendications

1. Dispositif pour stabiliser la carrosserie de véhicules à moteur, dont chaque roue (2, 3) est suspendue au moyen d'un vérin hydraulique à deux chambres (5, 6) et d'un ressort pour la reprise des charges statiques, les vérins hydrauliques à deux chambres (5, 6) étant respectivement connectés par des conduits (21, 22) à un réservoir hydro-pneumatique (27, 28) comportant un amortisseur et étant couplés entre eux en croix, et comprenant des moyens (32, 35, 36, 37) pour alimenter le vérin hydraulique à deux chambres (5, 6) à l'aide de fluide hydraulique, **caractérisé** en ce que les roues (2, 3) de véhicules sont montées sur un axe fixe (1), et en ce que les charges statiques sont supportées par un seul ressort (31) disposé approximativement au milieu de l'axe fixe (1) par rapport à la largeur de ce dernier.

2. Dispositif pour stabiliser la carrosserie de véhicules à moteur, dont chaque roue (2, 3) est suspendue au moyen d'un vérin hydraulique à deux chambres (5, 6) et d'un ressort pour la reprise des charges statiques, les vérins hydrauliques à deux chambres (5, 6) étant respectivement connectés par des conduits (21, 22) à un réservoir hydro-pneumatique (27, 28) comportant un amortisseur et étant couplés entre eux en croix, et comprenant des moyens (32, 35, 36, 37) pour alimenter le vérin hydraulique à deux chambres (5, 6) à l'aide de fluide hydraulique, **caractérisé** en ce qu'il comporte un ressort (31) unique pour supporter les charges statiques, qui est monté sensiblement au milieu d'un balancier (50), et en ce que les roues (2, 3) à suspension indépendante sont couplées à ce balancier (50) de telle manière que leur déplacement vertical est partagé en deux ou additionne.

3. Dispositif selon les revendications 1 ou 2, **caractérisé** en ce que le ressort (31) est un ressort à air.

4. Dispositif selon les revendications 1 ou 2, **caractérisé** en ce que le ressort (31) est constitué d'un réservoir hydro-pneumatique.

5. Dispositif selon les revendications 1 et 3, **caractérisé** en ce que le ressort à air (31) est monté au milieu de l'axe fixe (1), et en ce que les vérins hydrauliques à deux chambres (5, 6) sont articulés aux extrémités extérieures du pont (45) de l'axe dans la zone des têtes de roues (46, 47).

6. Dispositif selon l'une des revendications 1 ou 2, **caractérisé** en ce que les moyens (32, 35, 36, 37) pour alimenter le vérin hydraulique à deux chambres se composent de : une unité d'étranglement (32), un moteur électrique de réglage (35), un engrenage de démultiplication (36) et un entraînement de réglage (37).

7. Dispositif selon l'une des revendications 1 ou 2, **caractérisé** en ce que les moyens (32, 35, 36, 37) pour alimenter le vérin hydraulique à deux chambres se composent d'un activateur hydrostatique.

8. Dispositif selon l'une des revendications 1 ou 2, **caractérisé** en ce que le déplacement vertical des roues (2, 3) du véhicule, est détecté par des capteurs de déplacement (39, 40) et transmis à un microprocesseur (38).

9. Dispositif selon la revendication 5, **caractérisé** en ce qu'il est utilisé sur un omnibus.
